(19) Europäisches Patentamt
European Patent Office
Office européen des brevets

(11) **EP 3 407 299 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **18174152.1**

(22) Anmeldetag: **24.05.2018**

(51) Internationale Patentklassifikation (IPC):
***G06T 11/00*** *(2006.01)*

(52) Gemeinsame Patentklassifikation (CPC):
**G06T 11/008**

(54) **VERFAHREN UND VORRICHTUNG ZUR FINDUNG EINER POSITIONIERUNG UND ZUR DATENFUSION**

METHOD AND DEVICE FOR POSITIONING AND FOR DATA FUSION

PROCÉDÉ ET DISPOSITIF DE DÉFINITION D'UN POSITIONNEMENT ET DE FUSION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2017 DE 102017208811**

(43) Veröffentlichungstag der Anmeldung:
**28.11.2018 Patentblatt 2018/48**

(73) Patentinhaber: **FRAUNHOFER-GESELLSCHAFT zur Förderung der angewandten Forschung e.V.**
**80686 München (DE)**

(72) Erfinder:
• **Herl, Gabriel**
**94469 Deggendorf (DE)**
• **Kretzer, Christian**
**90480 Nürnberg (DE)**
• **Schön, Tobias**
**90453 Nürnberg (DE)**
• **Amr, Mahmoud**
**90768 Fürth (DE)**
• **Oeckl, Steven**
**91052 Erlangen (DE)**

(74) Vertreter: **Pfitzner, Hannes et al Schoppe, Zimmermann, Stöckeler Zinkler, Schenk & Partner mbB Patentanwälte Radlkoferstraße 2 81373 München (DE)**

(56) Entgegenhaltungen:
• **Gabriel Herl ET AL: "FUSION MEHRERER COMPUTERTOMOGRAPHIE-AUFNAHMEN ZUR VERBESSERUNG DER BILDQUALITÄT", FORSCHUNGSBERICHT 2016-2017, Juli 2017 (2017-07), Seiten 29-32, XP055508893, Deggendorf, Germany Gefunden im Internet: URL:https://www.th-deg.de/files/0/forschun g/forschungsberichte/forschungsbericht_201 7_web.pdf [gefunden am 2018-09-21] & Gabriel Herl: "Fusion mehrerer Computertomographie-Aufnahmen zur Verbesserung der Bildqualität", Wissenschaftlicher Vortrag, 4. TAG DER FORSCHUNG an der Technischen Hochschule Deggendorf , 9. März 2017 (2017-03-09), Gefunden im Internet: URL:https://www.th-deg.de/de/forschung/ver anstaltungen/tag-der-forschung/tdf-2017#vo rtraege-wissenschaftliche-praesentationen [gefunden am 2018-09-21]**
• **J. GUHATHAKURTA: "Reducing Computed Tomography Reconstruction and Beam Hardening Artifacts by Data Fusion", MEDICAL PHYSICS., Bd. 38, 22. Juni 2015 (2015-06-22), XP055501956, US ISSN: 0094-2405**

**Beschreibung**

Ausführungsbeispiele der vorliegenden Erfindung beziehen sich auf ein Verfahren zur Bewertung von einer oder mehreren Positionierungen eines Objekts beim CT-Scan des Objekts, um einerseits eine bessere Positionierung des Bauteils zu finden und andererseits mehrere CT-Scans zu einem optimalen Scan zu fusionieren, sowie auf eine entsprechende Vorrichtung. Ein weiteres Ausführungsbeispiel bezieht sich auf ein CT-System umfassend die erläuterte Vorrichtung.

Bei einem CT-Scan werden im Regelfall mehrere Durchstrahlungsaufnahmen (sog. Projektionen) aus unterschiedlichen Positionen entlang einer sog. CT-Trajektorie, genommen, um dann im Nachgang eine Rekonstruktion durchzuführen. Unter einer CT-Trajektorie wird die Bewegungsbahn von CT-System gegenüber dem zu untersuchenden Objekt bei der Untersuchung desselben verstanden. Entlang dieser Bewegungsbahn wird eine Vielzahl von Durchstrahlungsaufnahmen generiert. Beispiele für Trajektorien sind Kreisbahnen oder Helixbahnen. Hierbei kann das Objekt beispielsweise auch mit unterschiedlichen Relativpositionierungen gegenüber der Durchstrahlungsvorrichtung positioniert werden, wobei diese unterschiedlichen Positionierungen (Relativpositionierungen) dazu führen, dass im Endeffekt unterschiedliche Positionen in der Trajektorie für die Durchstrahlungsaufnahmen resultieren. Durch unterschiedliche Positionierung des zu untersuchenden Objekts kann nach CT-Scanvorgang und Rekonstruktion in unterschiedlichen Bereichen des entstehenden Volumens eine unterschiedlich hohe Bildqualität erreicht werden. Gerade bei metallischen oder großen Bauteilen können - je nachdem wie die Röntgenstrahlen das Objekt durchdringen - Artefakte wie Strahlaufhärtung in anderen Bildbereichen auftreten. Eine spezifische Positionierung führt meist nicht zu einem Volumen, das überall die höchste erreichbare Bildqualität besitzt. In der Praxis wird die Positionierung des Objekts von Fachleuten meist so gewählt, dass sie entweder die Bildqualität für ein bestimmtes, gewünschtes Maß oder aber die durchschnittliche Bildqualität des Gesamtvolumens grob optimieren. In beiden Fällen ist die Bildqualität nicht in allen Bildregionen optimal.

Deshalb besteht der Bedarf nach einem verbesserten Ansatz

Gabriel Herl: "Fusion mehrerer Computertomographie-Aufnahmen zur Verbesserung der Bildqualität", Vortragsfolien, präsentiert beim 4. TAG DER FORSCHUNG an der Technischen Hochschule Deggendorf,9. März 2017, XP055748535, offenbart ein Verfahren gemäß des Oberbegriffs des Anspruchs 1.

Aufgabe der vorliegenden Erfindung ist es, ein Konzept zu schaffen, das es ermöglicht, eine resultierende CT-Rekonstruktion zu erreichen, welche hinsichtlich Bildqualität und Ergonomie verbessert ist.

Die Aufgabe wird durch die unabhängigen Patentansprüche gelöst.

Ausführungsbeispiele der vorliegenden Erfindung schaffen ein Verfahren zur Findung von zumindest einer ersten und zweiten Positionierung oder, um genau zu sein, einer zweiten (weiteren) Positionierung ausgehend von einer willkürlichen ersten Positionierung eines Objekts bezüglich eines CT-Scans. Das Verfahren umfasst die Schritte: "Durchführen des CT-Scans für die erste Positionierung", "Rekonstruieren einer CT-Rekonstruktion des Objekts", "lokale Bewertung einer Bildgüte" und "Beurteilen der Bildqualität". Der CT-Scan wird für die erste Positionierung durchgeführt, um ein oder mehrere Durchstrahlungsaufnahmen (entlang der durch das CT-System sowie die erste Positionierung definierten Trajektorie) zu erhalten. Anders ausgedrückt heißt das, dass die Positionen für die eine oder mehreren Durchstrahlungsaufnahmen im Wesentlichen durch die Trajektorie definiert werden, wobei die gesamte Trajektorie durch die erste Positionierung (allgemein Positionierungen) des Objekts bezüglich des CT-Systems entsprechend versetzt oder rotiert ist. Ausgehend von einer oder mehreren Durchstrahlungsaufnahmen wird dann bei dem nächsten Schritt die CT-Rekonstruktion durchgeführt, um ein erstes Datenmodell (z. B. ein Voxelmodell) zu erhalten. Für einen oder mehrere lokale Bereiche (einem oder mehreren Voxeln) wird daher eine lokale Bewertung durchgeführt, um je lokalen Bereich (hier Voxel) einen oder mehrere Bildgütewert zu erhalten. In dem Schritt "Beurteilen" kann dann ausgehend von einem oder mehreren lokalen Bildgütewerten entschieden werden, ob die Bildqualität ausreichend ist bzw. ob weitere Scans für weitere Positionierungen sinnvoll sind. Falls die Bildqualität noch nicht ausreichend war, erfolgt dann eine Neupositionierung (zweite Positionierung des Objekts). Für diese zweite Positionierung werden dann die Schritte "Durchführen oder Simulieren des CT-Scans", "Rekonstruieren" und "lokales Bewerten" wiederholt.

Ausführungsbeispielen der vorliegenden Erfindung liegt die Erkenntnis zugrunde, dass bei der Rekonstruktion eines Objekts für unterschiedliche (regionale) Bereiche gegebenenfalls mit unterschiedlichen Trajektorien, d. h. also mit unterschiedlichen initialen Positionierungen des Objektes zu der Trajektorie, höhere resultierende Bildqualität erreicht werden können. Um für den in der Praxis gegebenen Anwendungsfall die richtige oder die richtigen Positionierungen zu finden, werden die einzelnen Rekonstruktionen von realen CT-Scans oder aber auch Simulationen der CT-Scans bewertet. Hierbei erfolgt die Bewertung in der CT-Rekonstruktion je lokalen Bereich, d.h. z.B. voxelweise. Ausgehend von den so ermittelten Bildgütewerten je ein oder mehrerer lokaler Bereiche, kann dann die Eignung der gewählten Position beurteilt werden. Entsprechend bevorzugten Ausführungsbeispielen erfolgt das Beurteilen für mehrere Positionierungen, so dass dann die Beste der untersuchten oder die für die einzelnen regionalen Bereiche geeignetste Positionierung ausgewählt wird. Im Resultat kann also die Bildqualität dadurch gesteigert werden, dass eine Untersuchung der einzelnen Positionierungen in Hinblick auf die resultierende (regionale) Bildqualität durchgeführt wird, um so die richtige Positionierung für die einzelnen regionalen Bereiche auszuwählen

Entsprechend einem weiteren Ausführungsbeispiel können die Positionierungen manuell oder automatisch durchgeführt werden. Bei der automatischen Durchführung ist es entsprechend Ausführungsbeispielen vorteilhaft, dass nach der ersten Positionierung das Verfahren für ein oder mehrere Positionierungen wiederholt wird, die sich voneinander unterscheiden und entsprechend verteilt sind. Hierbei kann dann entsprechend einem weiteren Ausführungsbeispiel die Positionierung ausgewählt werden, die die besten Bildqualitäten liefert und hier eine weitere Positionierung in der Nähe dieser optimalen Positionierung mit dem oben erläuterten Verfahren untersucht werden, um zu schauen, ob eine weitere Optimierung in der Nähe der bis dato besten Positionierung möglich ist. Dieser iterative Ansatz führt dadurch, dass verteilte Positionierungen gewählt werden, systematisch zu einer optimierten Positionierung bzw. optimierten Positionierungen für unterschiedliche regionale Bereiche.

Entsprechend dem Ausführungsbeispiel kann die Bewertung dadurch erfolgen, dass je lokalem Bereich/je Voxel ein Intensitätswert ermittelt bzw. aufsummiert wird, wobei hohe Intensitätswerte bzw. relativ hohe Intensitätswerte (im Vergleich zu den benachbarten lokalen Bereichen) auf eine gute Bildgüte hindeuten, also in einem hohen Bildgütewert resultieren.

Entsprechend einem weiteren Ausführungsbeispiel wäre es auch denkbar, dass die Bildgüte anhand eines Vergleiches bzw. lokalen Vergleiches für jeden lokalen Bereich der CT-Rekonstruktion mit einem simulierten Modell der CT-Rekonstruktion erfolgt. Hierbei kann beispielsweise ein Übereinstimmungsmaß als Gütewert je lokaler Bereich ermittelt werden oder auch untersucht werden, ob so genannte Verschmierungseffekte auftreten, wobei je höher der Grad der Verschmierung ist, desto geringer der Bildwert gesetzt wird.

Nachdem nun die Bildgütewerte ermittelt sind, werden diese ausgewertet. Das Auswerten kann durch einen einfachen Schwellwertvergleich erfolgen, wobei Werte oberhalb des Schwellwertes dann auf eine ausreichende Bildqualität hindeuten. Alternativ hierzu wäre auch ein Vergleich der Bildgütewerte resultierend aus zwei unterschiedlichen Positionierungen möglich. Hierbei werden dann die Bildgütewerte zugehörig zu einem lokalen Bereich miteinander verglichen und eben der lokale Bereich bzw. der zugehörige regionale Bereich zur Verwendung gekennzeichnet, der den höheren Bildgütewert hat. Diese Variante ist insbesondere dann vorteilhaft, wenn das endgültige Datenmodell als registriertes und fusioniertes Datenmodell ausgelegt ist und die Informationen aus einem ersten und einem zweiten Datenmodell (erstes Datenmodell ermittelt ausgehend von einer ersten Positionierung, zweites Datenmodell ermittelt ausgehend von einer zweiten Positionierung) beinhaltet.

Ein weiteres Ausführungsbeispiel schafft ein Verfahren zum Fusionieren von CT-Scans für zumindest eine erste und eine zweite Positionierung eines Objekts bezüglich des CT-Systems. Dieses Verfahren umfasst die Schritte "Durchführen des CT-Scans", "Rekonstruieren der Datenmodelle oder der Durchstrahlungsaufnahmen " und "lokale Bewertung einer Bildgüte", wobei diese drei Schritte für zumindest zwei Positionierungen wiederholt werden. Zusätzliche umfasst das Verfahren auch noch den Schritt des Fusionierens der zumindest zwei CT-Scans für die zwei Positionierungen unter Berücksichtigung der Bildgütewerte beinhaltet.

Diesem Verfahren liegt die Erkenntnis zugrunde, dass die lokale Bewertung nicht nur dazu eingesetzt werden kann, um zu bestimmen, ob die Positionierungen eine ausreichende Bildqualität liefert oder nicht, sondern auch dazu nutzbar ist, um die Rekonstruktion in der Art zu unterstützen, dass einzelne CT-Rekonstruktionen, zugehörig zu einzelnen Positionierungen, mehr oder weniger Einfluss in dem finalen (optimierten) Objektvolumen finden. Dieses Verfahren bietet den Vorteil, dass die Bildqualität der optimierten CT-Rekonstruktion signifikant verbessert ist, da insbesondere die lokalen Bereiche mit hoher lokaler Bildgüte Einfluss finden. Durch das skizierte Verfahren ist es also ohne weiteren Aufwand durch den Benutzer möglich, aus einem oder mehreren CT-Scanvorgängen ein Objektvolumen zu erzeugen, das deutlich weniger Artefakte (vor allem Strahlaufhärtung und Streustrahlartefakte) und eine höhere Bildqualität aufweist. Bauteile mit hoher Dichte, z. B. aus Metall können nun effektiver untersucht werden. Durch das beschriebene Verfahren wachsen Qualität und Anwendungsspektrum der CTs.

Hierbei können in das fusionierte Datenmodell entweder die regionalen bzw. lokalen Bereiche integriert werden, die den relativ höheren Gütewert aufweisen, oder es können alle Daten mit integriert werden, wobei ausgehend von den ermittelten Gütewerten eine Gewichtung erfolgt. Diese Gewichtung kann beispielsweise mittels folgender Formel erfolgen

$$v_i = \frac{1}{g_{i1} + g_{i2}} (v_{i1} g_{i1} + v_{i2} g_{i2})$$

wobei $v_i$ das gesuchte Voxel im fusionierten Datenmodell ist, $v_{i1}$ das entsprechende Voxel im ersten Datenmodell ist, $v_{i2}$ das entsprechende Voxel im zweiten Datenmodell ist, wobei $g_{i1}$ der Bildgütewert für das entsprechende Voxel des ersten Datenmodells ist und $g_{i2}$ der Bildgütewert des entsprechenden Voxels im zweiten Datenmodell. Dieser Ansatz hat den Vorteil, dass so die größtmögliche Datenbasis verwendet wird, wobei die Bewertung der Bildgüte je Datenbasis bzw. die regionale Bewertung der Bildgüte je Datenbasis Mitberücksichtigung findet. Entsprechend dem Ausführungsbeispiel kann das oben erläuterte Verfahren deshalb auch den Schritt des Positionierens von zumindest zwei Datensätzen umfassen, wobei die Fusionierung unter Berücksichtigung der entwickelten Bildgütewerte erfolgt. Bei diesem Verfahren kann entsprechend weiteren Ausführungsbeispielen auch eine lokale Bewertung und Überprüfung erfolgen, um beurteilen zu können, wie die resultierende Bildqualität bei dem fusionierten Datenmodell ist. Ausgehend hiervon können natürlich auch noch weitere Datenmodelle mit in das fusionierte Modell integriert werden.

Das Verfahren kann selbstverständlich auch computerunterstützt ausgeführt werden. Deshalb bezieht sich ein weiteres Ausführungsbeispiel auf ein Computerprogramm.

Entsprechend einem weiteren Ausführungsbeispiel wird eine Vorrichtung geschaffen, die das oben erläuterte Verfahren ausführt. Ein weiteres Ausführungsbeispiel bezieht sich auf ein System mit der Vorrichtung zur Ausführung des Verfahrens sowie einer Durchstrahlungsvorrichtung.

Weiterbildungen sind in den Unteransprüchen definiert. Ausführungsbeispiele der vorliegenden Erfindung werden anhand der beiliegenden Zeichnungen erläutert. Es zeigen:

Fig. 1    ein schematisches Flussdiagramm eines Verfahrens zur Ermittlung der resultierenden Bildqualität für eine CT-Rekonstruktion gemäß einem Basisausführungsbeispiel, zur Findung der besten, anwendungsspezifischen, einzelnen Positionierung;

Fig. 2    ein schematisches Flussdiagramm des Verfahrens nach Fig. 1 gemäß einem erweiterten Ausführungsbeispiel mit Fokus auf die Beurteilung der lokalen Bildgüte, um ein verbessertes Datenmodel zu erhalten;

Fig. 3    ein schematisches Flussdiagramm einer vollautomatischen Variante zur Auswahl von beliebig vielen sich ergänzenden Positionierung für die CT-Rekonstruktion sowie der Fusion der Daten gemäß einem erweiterten Ausführungsbeispiel, um ein optimiertes Datenmodell zu erhalten;

Fig. 4    ein schematisches Flussdiagramm des Verfahrens nach Fig. 3 in einer Variante mit vorgegebenen Positionierungen gemäß einem weiteren Ausführungsbeispiel;

Fig. 5    eine schematische Darstellung eines CT-Systems mit einer Durchstrahlungsvorrichtung sowie einer Vorrichtung zur Bewertung der Position für die CT-Rekonstruktion sowie der Berechnung der Positionen für die CT-Rekonstruktion gemäß einem weiteren Ausführungsbeispiel.

Bevor nachfolgend Ausführungsbeispiele der vorliegenden Erfindung anhand der Figuren im Detail erläutert werden, sei darauf hingewiesen, dass gleiche Elemente mit gleichen Bezugszeichen versehen sind so dass die Beschreibung derer aufeinander anwendbar bzw. austauschbar ist.

Bei nachfolgender Diskussion der Ausführungsbeispiele wird Bezug genommen auf eine erste Positionierung, eine zweite Positionierung und eine dritte Positionierung (des Objekts in Bezug auf CT-System) für den CT-Scan. Die Beschreibung der ersten, zweiten, dritten Positionierung bezieht sich jeweils auf die Positionierung des Objekts bezüglich der Durchstrahlungsvorrichtung oder, um genau zu sein, bezüglich der durch die Durchstrahlungsvorrichtung (CT-System) angewendeten Trajektorien (Kreis-CT, Helix-CT o. ä.). Da im Regelfall bei einem CT-Scanvorgang mehrere Durchstrahlungsaufnahmen aus unterschiedlichen Positionen, z. B. durch Rotieren der Durchstrahlungsvorrichtung, um das Objekt, oder durch Verfahren des Objekts relativ zu der Durchstrahlungsvorrichtung angefahren werden, sei darauf hingewiesen, dass sich die unten in Bezug genommene erste, zweite und dritte Positionierung auf die Position des Objekts am Anfang des CT-Scans, d. h. also auf die Startposition, oder auf eine Referenzposition der Trajektorien für den jeweiligen Scan-Vorgang bezieht.

Bei der Positionierung des Objekts ist sowohl die Orientierung (Drehung um beliebige Achsen) als auch die Verschiebung in beliebige Richtungen gemeint. Mit Positioniereinheit sind sowohl Positioniereinheiten innerhalb der CT (z.B. Hexapod oder Spidermover) als auch Roboter außerhalb der CT gemeint, die in der Lage sind das Objekt zu bewegen.

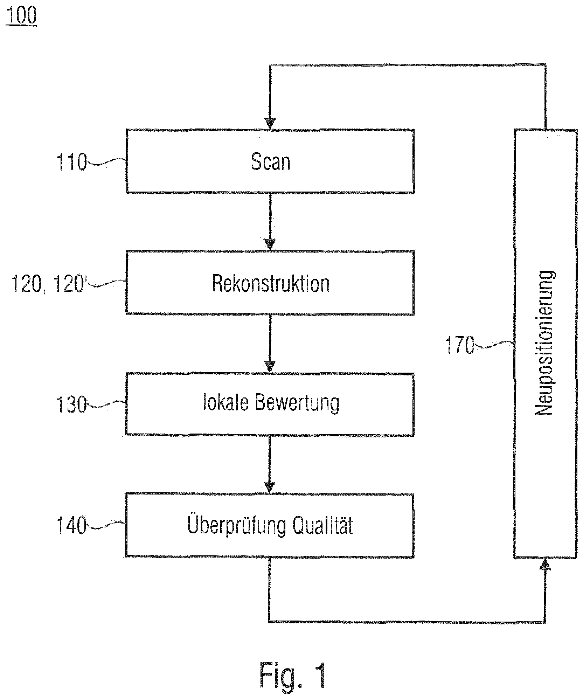

Nachfolgend wird ein Verfahren 100 erläutert, das es ermöglicht optimale Positionierungen im Sinne von Referenzpositionen bzw. einer Trajektorie oder dem Referenzpunkt einer Trajektorie zu finden, die eine für den Anwendungsfall hochwertige CT-Rekonstruktion ermöglichen. Hierzu wird in einem ersten Schritt die (willkürlich) gewählter erste Positionierung anhand des resultierenden Ergebnisses bewertet, um dann anhand der so genannten bestimmten resultierenden Bildqualität zu entscheiden, ob weitere oder andere Positionierungen für die CT-Rekonstruktion hinzugezogen werden sollen. In anderen Worten ausgedrückt heißt das, dass das nachfolgende Verfahren also die Basis für die Bestimmung von einer zweiten, dritten oder weiteren Positionierung für einen CT-Scan bildet. Dieses Verfahren 100 wird Bezug nehmend auf Fig. 1 nachfolgend erläutert.

Fig. 1 zeigt ein Verfahren 100 mit den Basisschritten 110, 120, 130 und 140. Im ersten Schritt 110 wird ein CT-Scan für eine erste Positionierung, die beispielsweise durch Benutzer festgelegt sein kann, durchgeführt. Ausgehend von der ersten Positionierung kann ein Verfahren (mittels eines Manipulators) des CT-Systems entlang der vorgegebenen Trajektorie innerhalb dieses CT-Sans erfolgen, so dass sich ausgehend von der ersten Positionierung eine Vielzahl an weiteren Positionen zugehörig zu der ersten Positionierung einstellen. Bei diesem CT-Scan werden im Regelfall mehrere Durchstrahlungsaufnahmen genommen, um dann im nächsten Schritt die CT-Rekonstruktion, z. B. in Form eines Voxel-Models zu rekonstruieren. An dieser Stelle sei angemerkt, dass es alternativ denkbar sei, dass statt der tatsächlichen Durchführung eine Simulation eines CT-Scans erfolgt. Hintergrund ist, dass (um eine optimale Positionierung zu finden) die Verwendung von Simulationen sinnvoll wäre, da es viel Zeit und Kosten benötigen würde, wenn man viele unterschiedliche Positionen tatsächlich aufnimmt und dann wieder verwirft.

Dieser Schritt ist mit dem Bezugszeichen 120 versehen. Bei dem Schritt 120 können dann die mit dem Schritt 110 gewonnen Durchstrahlungsaufnahmen miteinander kombiniert werden, um ein Voxel-Modell, d. h. also ein 3D-Volumenmodell zu erzeugen. Dieses Modell wird für nachfolgende Schritte als erster Datensatz bezeichnet.

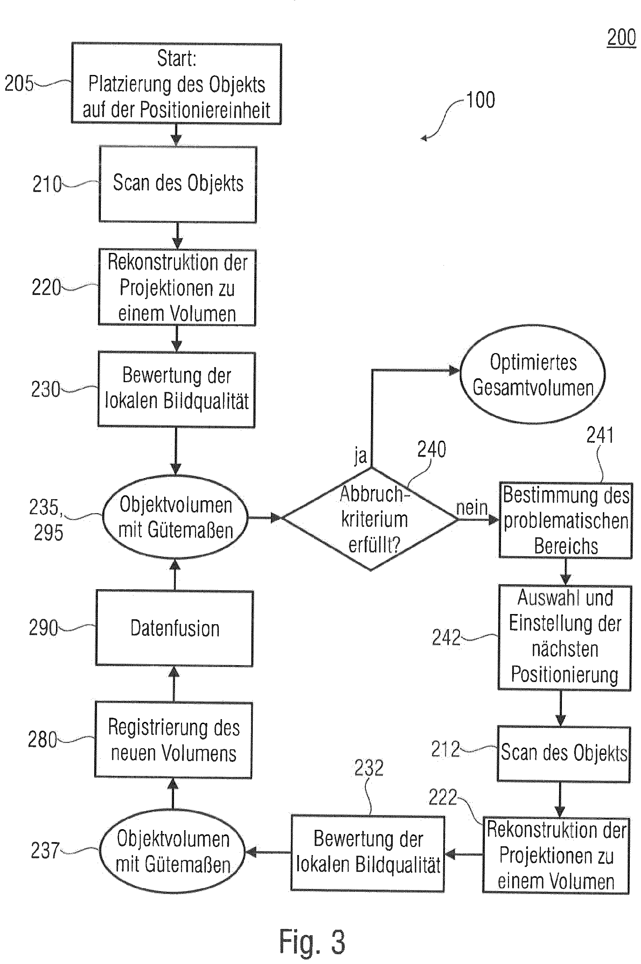

Ausgehend von dem ersten Datensatz kann dann in dem Schritt 130 eine lokale Bewertung für ein oder mehrere lokale Bereiche, z. B. ein oder mehrere Voxel des Voxel-Modells/ersten Datenmodells erfolgen. Bei diesem Schritt 130 wird je lokaler Bereich ein Bildgütewert (anzeigend die vorherrschende Bildgüte oder eine Eigenschaft in Bezug auf die resultierende Abbildung) ermittelt und für den nachfolgenden Schritt 140 bereithält. Zwei Methoden zur Bildgütewertermittlung werden im Zusammenhang mit Fig. 3 als Beispiel beschrieben.

Da die lokale Bewertung bevorzugterweise, aber nicht notwendigerweise für eine Vielzahl von lokalen Bereichen (d. h. eine Vielzahl von Voxel) durchgeführt wird, kann nun im nachfolgenden Schritt 140 eine Auskunft über die resultierende Bildqualität für das CT-Modell oder einen regionalen Bereich (d. h. einen Teil) des CT-Modells durchgeführt werden.

Bei Schritt 140 kann je nach Anwendungsfall entschieden werden, ob das erhaltene Datenmodell ausreichend gut oder nicht ausreichend gut ist. Dies kann beispielsweise durch Vergleiche mit Schwellwerten geschehen, die je nach Anwendungsfall gewählt sind und für jeden regionalen Bereich anders sein können. Als weiteres Beispiel wäre es auch möglich eine Kombination mehrere regionaler Bildgütewerte zu ermitteln (z.B. durch Mittelung oder Summierung) und diesen Wert mit einem Schwellwert zu vergleichen.

Sollte das Datenmodell bzw. die resultierende Bildgüte nicht ausreichend sein, wird ausgehend von dem (Entscheidungs-) Schritt 140 eine Iteration durchgeführt und der Schritt 170 veranlasst.

Bei dem Schritt 170 handelt es sich um den Schritt der Neupositionierung des Objekts, um dieses beispielsweise in eine zweite Position zu überführen. Dieser Schritt kann automatisch bzw. vollautomatisch erfolgen, indem beispielsweise der Manipulator des CT-Systems angesteuert wird und so das Objekt (zwischen mehreren nacheinander erfolgenden CT-Scanvorgängen von Positionierung zur nächsten Positionierung) verfahren wird. Ausgehend von der Annahme, dass beispielsweise die erste Positionierung vom Benutzer durch Platzieren des Objekts auf der Positioniereinheit vorgegeben wird, können entsprechend einem Ausführungsbeispiel die nachfolgenden Positionierungen des Objekts (vgl. Schritt 170) automatisch so gewählt werden, dass jeweils eine optimale Verbesserung der Bildqualität zu erwarten ist. Hierbei ist vorteilhaft, dass der Benutzer sich somit keine Gedanken über weitere Positionierungen machen muss und während des Verfahrens nicht anwesend zu sein hat. Hierbei kann der Schritt 170 auch einen Algorithmus umfassen, wie Bezug nehmend auf Fig. 3 noch erläutert werden wird. Alternativ dazu wäre es auch denkbar, dass der Schritt semiautomatisch erfolgt, d. h. also, dass dem Benutzer eine weitere Positionierung des Objekts vorgeschlagen wird, die er dann entweder bestätigt, so dass die Positionierung durch einen Manipulator erfolgt oder selber (händisch) vornimmt. Alternativ wäre es natürlich auch möglich, dass die Positionierung direkt durch den Benutzer durchgeführt wird, bis der Benutzer ausgehend von dem Schritt 140 das Signal erhält, dass nun eine gute Bildgüte erreicht ist. Möglich wäre aber auch beispielsweise eine neue Positionierung durch einen Benutzer basierend auf dessen Erfahrungswerten und Vorstellungen. D.h. also dass für die Wahl der weiteren Positionierung unterschiedliche Herangehensweisen denkbar sind. Beispielsweise ist hier ein Verfahren denkbar, wie es im Zusammenhang mit Fig. 3. erklärt wird.

Ausgehend von dem neu positionierten Objekt wird nun das Verfahren mit den Schritten 110, 120 und 130 wiederholt. Die Schritte 110, 120, 130 und 140 werden im Wesentlichen, wie oben bereits ausgeführt, durchgeführt. Insofern werden wiederum die entstehenden Projektionen jeweils rekonstruiert und die unterschiedlichen Volumen algorithmisch auf ihre lokale Güte untersucht. Das Ergebnis der zweiten Iteration ist ein zweites Datenmodell mit zugehöriger lokalen Gütemaßen. Es sei angemerkt, dass beim zweiten Datenmodell bereits Daten (Durchstrahlungsaufnahmen) des ersten Datenmodells mitbenutzt sein können. D.h. also dass entsprechend Ausführungsbeispielen bei der Iteration anstelle des Schrittes 120 der Schritt 120' ausgeführt werden, entsprechend welchem die Rekonstruktion unter Berücksichtigung der in dem Schritt 110 gewonnen Durchstrahlungsaufnahmen für die erste Positionierung zusammen mit den Durchstrahlungsaufnahmen für die zweite (weitere) Positionierung erfolgt.

Das Ergebnis des iterativ durchgeführten Schritts 140 ist also eine Bewertung, inwieweit die bisherigen Positionierungen für die gesamte CT-Rekonstruktion oder für einen regionalen Bereich der CT-Rekonstruktion geeignet sind. Sollten die DurchstrahlungsAufnahmen insgesamt geeignet sein, um eine erfolgreiche Rekonstruktion durchführen zu können, wäre das Verfahren an dieser Stelle abgeschlossen. Ist diese CT-Rekonstruktion aber nur bereichsweise oder nicht ausreichend, kann entsprechend weiteren Ausführungsbeispielen iterativ eine weitere Positionierung festgelegt werden und das Verfahren für diese weitere Positionierung wiederholt werden, um festzustellen, ob diese weitere Positionierung global oder bereichsweise (z. B. für einen oder mehrere regionale Bereiche) geeigneter ist. Dieser Schritt des Definierens neuer Start- bzw. Referenzpositionen 170 und des Durchführens des Verfahrens 110-140 je Start- oder Referenzposition kann dann entsprechend weiteren Ausführungsbeispielen solange wiederholt werden, bis für jeden regionalen Bereich eine Positionierung gefunden ist, ausgehend von welcher eine ausreichende Bildqualität zu erwarten ist, oder bis zumindest für die relevanten Regionen eben diese Positionierung gefunden ist oder bis nach einer gewissen Zeit keine zufriedenstellende Lösung gefunden wurde. Hierbei sei angemerkt, dass das Ergebnis auch sich derart darstellen kann, dass für unterschiedliche regionale Bereiche unterschiedliche Startpositionen (Positionierungen) optimal sind.

An dieser Stelle sei auch angemerkt, dass der regionale Bereich auch so klein definiert sein kann, dass ein regionaler Bereich durch nur einen lokalen Bereich definiert wird.

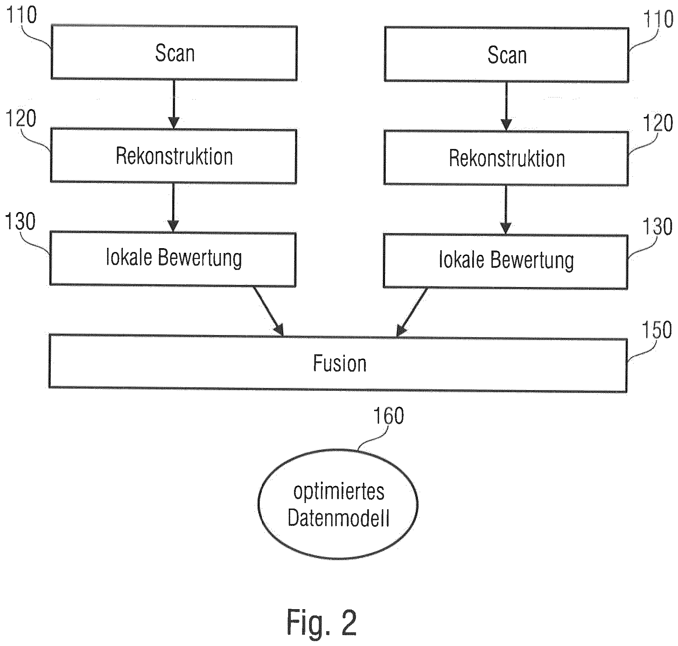

Fig. 2 zeigt das Verfahren 150, das die Schritte 110, 120 bzw. 120' sowie 130 umfasst. Diese Schritte 110, 120 bzw. 120' sowie 130 werden zumindest einmal für eine erste und einmal für eine zweite Positionierung durchführt, um ein erstes und zweites Datenmodell zu erhalten, so dass am Ende ein optimiertes Datenmodell 160 basierend auf zwei CT-Rekonstruktionen bzw. basierend auf den Durchstrahlungsaufnahmen der zwei CT-Rekonstruktionen rekonstruiert werden kann.

Um dieses optimierte Modell 160 zu erhalten, werden in einem vorgelagerten Schritt 150 die generierten CT-Rekonstruktionsdatensätze, hier die erste und die zweite CT-Rekonstruktion zusammengefügt. Das Fusionieren 150 erfolgt nicht durch einfaches Registrieren der Datenmodelle zueinander sowie Addition der Datenmodelle, sondern vor allem unter Berücksichtigung der den einzelnen CT-Datensätzen zugeordneten Gütewerte. Hierbei werden entsprechend einer Variante einzelne regionale Bereiche, für die beispielsweise ein hoher lokaler Gütewert vorliegt, den Modellen entnommen und in den fusionierten Datensatz (optimiertes Datenmodell 160) übernommen. So ist es also möglich, dass die einzelnen Bereiche aus unterschiedlichen Datenmodellen zusammengesetzt werden, wobei eine Berücksichtigung der ermittelten lokalen Bewertung erfolgt. Alternativ zu diesem Ansatz wäre es auch denkbar, dass die vollständigen Datenmodelle zu dem fusionierten/optimierten Datenmodell 160 zusammengefügt werden, wobei dann ausgehend von den lokalen Gütemaßen eine Gewichtung der einzelnen regionalen Bereiche aus den unterschiedlichen Rekonstruktionen erfolgt. Infolge der Gewichtung werden dann die Bereiche, für die eine hohe lokale Güte ermittelt wurde, mit höherer Gewichtung in das fusionierte Datenmodell übernommen im Vergleich zu den Bereichen mit geringer lokaler Bewertung. Hierbei werden also alle entstandenen Projektionen in eine einzelne optimierte Rekonstruktion 160 integriert. Dieses Beispiel ist ausführlich in Fig. 3 erläutert. Ein stark simplizierter Ansatz, um das verbesserte Datenmodell 160 zu erreichen, ist, dass schlicht das Datenmodell aus der für den Anwendungsfall optimalen Positionierung als optimiertes Modell 160 genommen wird.

Allgemein lässt sich das Vorgehen beim Schritt 150 dadurch zusammenfassen, dass mit Hilfe der Information der lokalen Güte die Registrierung der Volumen und die Datenfusion erfolgt, um ein insgesamt verbessertes Volumenmodell 160 zu erzeugen, wobei entweder Teile von Datensätzen verworfen oder auch nur mitberücksichtigt bzw. weniger berücksichtigt werden oder alle entstanden Projektionen in einer Rekonstruktion verarbeitet werden.

An dieser Stelle sei auch angemerkt, dass, wie auch bei dem Ausführungsbeispiel aus Fig. 1 der Schritt 120 der Iterationen auch auf Basis der Daten von vorangegangenen Iterationen erfolgen kann (vgl. Schritt 120'). Von einer anderen Seite betrachtet, heißt das, dass der Schritt 150 des Fusionierens in den Schritt 120' also integriert ist.

Entsprechend weiteren Ausführungsbeispielen kann bei der Iteration auch eine Neupositionierung, wie sie im Zusammenhang mit Fig. 1 erläutert wurde, erfolgen, um die Positionierung(en) für die nachfolgende Iteration zu optimieren. Hierbei ist es entsprechend Ausführungsbeispielen auch wiederum denkbar, dass die Positionierung automatisch oder semi-automatisch (durch Benutzervorschlag) erfolgt. Bei der automatischen Positionierung besteht dann der Vorteil, dass mit Ausnahme des Einlegens des Objekts (erste Positionierung) keine weitere Benutzerinteraktion notwendig ist.

Fig. 3 zeigt ein Verfahren 200, das funktionell dem erweiterten Verfahren 100 aus Fig. 1 entspricht, aber auch noch optionale Aspekte mit umfasst.

Das Verfahren 200 hat die initialen Schritte 205, 210, 220, 230.

Im Schritt 205 wird zum Start des Verfahrens das zu untersuchende Objekt auf der Positioniereinheit platziert. Alle später folgenden Objektpositionierungen werden bevorzugterweise automatisch ausgewählt.

Im nächsten Schritt 210 werden bei einer eingestellten Positionierung CT-Projektionen aufgenommen (bei beliebiger Trajektorie, etwa Kreis- oder Helix-CT). Der entstehende Projektionsansatz wird zu einem Objektvolumen rekonstruiert, wobei hierzu beispielsweise auf den Feldkamp-Algorithmus oder der Algebraischen Rekonstruktionstechnik zurückgegriffen wird.

Im nachfolgenden Schritt 230 erfolgt dann die lokale Bewertung der Bildgüte. Um später eine Fusion durchführen zu können, bei der die Stärken und Schwächen des Volumens unterschiedlich stark einfließen sollen, wird nun abgeschätzt wie gut die einzelnen Voxel des Volumens eine Näherung an die Realität darstellen. Es wird also eine lokale Bewertung der Bildgüte durchgeführt:

Hierzu sind einerseits Möglichkeiten denkbar, die anhand von CAD-Modellen Simulationen ausführen und somit Abschätzungen der lokalen Bildqualität für Volumen erlauben. Andererseits wären "on the fly"-Möglichkeiten denkbar, die ohne weiteres Vorwissen Abschätzungen durchführen. Letztlich wird so jedem Voxel jedes Volumens ein Gütewert zugeordnet. Ist dieser hoch, so bedeutet dies, dass der Grauwert dieses Voxels wahrscheinlich nahe an der Realität liegt. Im Folgenden werden zwei Beispiele für Verfahren zur Bewertung der lokalen Bildgüte beschrieben.

Für den Schritt 230 werden die folgenden Verfahren angewandt:

Variante 1: Lokale Bewertung der Bildgüte - "*On the fly*": Sind keine CAD-Daten oder nicht genügend Zeit für Simulationen vorhanden, so wird eine "on the fly"-Bewertung durchgeführt:
Hierzu wird für jedes Voxel die verbliebene Intensität aller Strahlen summiert, die das Voxel passierten. Es wird also für jedes Voxel im Volumen aus jeder Projektion ein eindeutig zugehöriger Intensitätswert (Pixelwert der Projektion) gewählt und zu einer Kenngröße aufaddiert. Ist die entstehende Kenngröße gering, so bedeutet dies, dass ein Großteil der Energie der Strahlen, die das Voxel durchdrangen, absorbiert wurde und somit Artefakte wie z.B. Strahlaufhärtung hier wahrscheinlich stärker auftraten. Einem solchen Voxel wird folglich ein niedrigerer Bildgütewert zugeordnet als einem Voxel mit hoher Kenngröße.

Variante 2: Lokale Bewertung der Bildgüte - "Mit Simulationen": Sind CAD-Daten und genügend Zeit für Simulationen vorhanden, so wird folgendes Verfahren angewandt:
Auf Basis der CAD-Daten des zu untersuchenden Objekts werden sowohl möglichst realistische Simulationen wie auch Simulationen mit gezielten, punktförmigen Störungen (z.B. mit dem Fraunhofer Simulationstool XLab) durchgeführt. Nach der Rekonstruktion zu Volumen lässt sich im Vergleich herausfinden wie gut die Störungen abgebildet werden. Ist eine Störung nicht sichtbar oder stark verschmiert, so folgt, dass im Bildbereich der Störung keine hohe Detailauflösung vorliegen kann. Wird sie hingegen annähernd punktförmig, korrekt dargestellt, so ist die Bildschärfe hoch. Bei guter Detailauflösung der Störung wird dem zugehörigen Voxel also ein hoher Bildgütewert zugeordnet.

Das Ergebnis des Schrittes 230 ist ein Objektvolumen mit lokalen Gütemaßen. Im Flussdiagramm ist dieses Ergebnis mit dem Bezugszeichen 235 markiert. Hierbei kann es sich beispielsweise um einen herkömmlichen ersten Datensatz, z. B. in Form eines Voxel-Modells handeln, bei welchem zu jedem Voxel oder zu jeder regionalen Bildbereich ein Gütemaß in Form eines Bildgütewertes gespeichert ist.

Im nachfolgenden Schritt wird dann das Abbruchkriterium überprüft. Dieser Schritt ist mit dem Bezugszeichen 240 versehen. Ist die Bildgüte in allen Voxeln oder Bildbereichen ausreichend gut, so kann das Verfahren hier abgebrochen werden. Ist dies nicht der Fall, so wird untersucht mit welcher neuen Positionierung eine maximale Steigerung der Bildqualität zu erwarten ist. Hierzu sind viele Methoden denkbar. Im Folgenden ein beispielhaftes Verfahren zur Neupositionierung: Es wird zuerst der Bildbereich bestimmt, der im bestehenden Volumen die schlechtesten Gütewerte aufweist (vgl. Bezugszeichen 245). Dieser Bereich kann durch Addition der Gütewerte der Voxel in unterschiedlichen Bereichen im Volumen und anschließendem Vergleich der Werte leicht gefunden werden.

Nach Auswahl des problematischsten Bereichs 245 wird nun die Positionierung gesucht, die die Bildgüte des gewählten Bereichs maximiert. Hierzu ist z.B. folgendes Verfahren, dass sich an die optimale Positionierung herantastet (vgl. Bezugszeichen 270), denkbar: Es wird eine beliebige Anzahl gleichmäßig verteilter Positionierungen betrachtet, die sich hinreichend stark von den bisher untersuchten Positionierungen unterscheiden. Diese können entweder tatsächlich real eingestellt oder aber simuliert werden. Für jede dieser Positionierungen wird die Bildgüte aller Voxel aus dem Problembereich in den realen Daten oder den erstellten Simulationen berechnet (z.B. mit den gerade beschriebenen Methoden aus Schritt 230) und für jede Positionierung einzeln summiert. Für jede betrachtete Positionierung entsteht so eine Kenngröße über die erwartete Bildgüte innerhalb des Problembereichs. Nun können schrittweise weitere zur bisher besten Positionierung ähnliche Positionierungen untersucht werden (wiederum entweder durch tatsächliche reale Positionierung des Objekts oder durch Simulation). Nach einer vorher festgelegten Anzahl von Suchschritten wird die Positionierung mit der besten Kenngröße ausgewählt. Diese Positionierung wird von der Positioniereinheit eingestellt.

Danach erfolgt ein erneuter Scan (vgl. Bezugszeichen 212) und eine erneute Rekonstruktion (vgl. Bezugszeichen 222). Bei der nun neu eingestellten Positionierung werden wieder Projektionen aufgenommen. Der entstehende Projektionssatz wird zu einem weiteren Objektvolumen rekonstruiert. Es liegen nun zwei Objektvolumen mit unterschiedlichen Positionierungen vor. Zu diesem zweiten Datensatz wird ebenfalls eine lokale Bewertung der lokalen Bildqualität durchgeführt, was anhand des Schrittes 232 symbolisiert ist. Das Ergebnis dieses Schrittes 232 ist wiederum ein Objektvolumen mit Gütemaß 237, nämlich das zweite Datenmodell mit den entsprechenden Bildgütewerten.

In diesem Ausführungsbeispiel werden nun die erhaltenen Datenmodelle, hier das erste und das zweite Datenmodell, bei weiteren Iterationen auch noch die zusätzlichen Datenmodelle, d. h. z. B. das bereits fusionierte Datenmodell sowie das dritte Datenmodell miteinander registriert und fusioniert. In dem Flussdiagramm sind diese Schritte mit den Bezugszeichen 280 und 290 versehen.

Da die Positioniereinheit möglicherweise nicht in der Lage ist die gewünschte Position präzise genug anzufahren, ist eine Registrierung 280 des vorherigen und des neu entstanden Volumens nötig. Da sich das Objekt dauerhaft in der gleichen Aufspannung auf der Positioniereinheit befindet, können für eine hochgenaue Registrierung Merkmale der Positioniereinheit verwendet werden.

Nach der Registrierung 280 kann nun jedem Voxel im neu erstellten Volumen ein Voxel des vorherigen Volumens zugeordnet werden, das den gleichen Objektpunkt beschreibt. Für jeden der durchgeführten Scans ist nun die exakte Aufnahmegeometrie bekannt.

Im Folgenden werden zwei Beispiele zur Fusion 290 der vorhandenen Daten zur Erzeugung eines verbesserten Volumens vorgestellt. In beiden Beispielen werden Stärken und Schwächen der Volumen bzw. der zugrunde liegenden Projektionen beachtet und mit diesem Wissen eine "intelligente" Fusion durchgeführt. Hierfür sind wieder unterschiedliche Varianten denkbar. Im Folgenden beispielhaft zwei Varianten:

Variante 1: Fusion der Daten - Fusion der Volumen durch gewichtete Addition. Auch für das neu erstellte Volumen werden Gütewerte für jedes Voxel bestimmt (vgl. 232). Mit Hilfe dieser Gütewerte kann eine gewichtete Addition der beiden Volumen durchgeführt werden und so ein neues, verbessertes Gesamtvolumen entstehen: Jedem Voxel im Gesamtvolumen wird folgender Wert zugewiesen: Die Summe über die sich entsprechenden Voxel der bestehenden Volumen multipliziert mit ihren Gütewerten und dividiert durch die Summe der Gütewerte (zur Normierung). Sei $v_i$ der gesuchte Voxel im Gesamtvolumen, $v_{i1}$ der entsprechende Voxel im vorherigen Volumen, $v_{i2}$ der entsprechende Voxel im gerade erzeugten Volumen und $g_{ij}$ der Gütewert des jeweiligen Voxels $v_{ij}$. Dann berechnet sich der Wert des Voxels $v_i$ im fusionierten Volumen nach folgender Formel:

$$v_i = \frac{1}{g_{i1} + g_{i2}} (v_{i1}g_{i1} + v_{i2}g_{i2})$$

Variante 2: Fusion der Daten - Verwendung aller Projektionen in einer Rekonstruktion. Anstelle einer Fusion der Volumen kann auch auf alle bisher erstellten Projektionen zurückgegriffen werden. Aufgrund der Registrierung ist für jede Projektion die exakte Aufnahmegeometrie bekannt. Hierdurch können alle bisher erzeugten Projektionen in einer einzigen Rekonstruktion (z.B. mit der Algebraischen Rekonstruktionstechnik) zu einem Volumen rekonstruiert werden.

Da die sogenannten Tuy-Bedingungen bei Verwendung von Projektionen aus unterschiedlichen Positionierungen für viele (möglicherweise alle) Punkte im Objekt erfüllt sind, sollte so schon ein besseres Volumen entstehen. Um nun jedoch die Stärken und Schwächen jeder Projektion innerhalb der Rekonstruktion mit einzubeziehen, ist z.B. folgendes Vorgehen möglich:

Ist der Intensitätswert eines Pixels in einer Projektion sehr gering, so bedeutet dies, dass der Strahl der zu diesem Pixel führte, sehr stark abgeschwächt wurde und mit hoher Wahrscheinlichkeit zu Artefakten im Volumen führen wird. Um also Artefakte zu vermeiden können solche Pixel (bzw. die Strahlen die zu diesen Pixeln führen) innerhalb der Rekonstruktion einfach ignoriert werden.

In der Algebraischen Rekonstruktionstechnik wird für jedes Pixel aus jeder betrachteten Projektion ein Korrekturwert ermittelt, der dann in den nächsten Updateschritt zur iterativen Verbesserung des Volumens einfließt. Dieser Schritt wird für Pixel mit zu niedrigem Intensitätswert nun einfach nicht durchgeführt.

Um jedoch nicht zu viel Informationen zu ignorieren und die Vorteile, die durch die Erfüllung der Tuy-Bedingungen eintreten, nicht wieder zu verlieren, sollte der Wert ab dem Pixel ignoriert werden nicht zu hoch gewählt werden.

Das Ergebnis der Datenfusion 290 ist wiederum ein Objektvolumen mit Gütemaß, hier ein fusioniertes Objektvolumen mit Gütemaß 295. Dieser Datensatz, den ersten und zweiten Datensatz umfasst ersetzt den ersten Datensatz 235, wobei nun ausgehend von diesem Datensatz 295 die Überprüfung der regionalen oder globalen Bildqualität durchgeführt wird. Dieser Schritt 240 symbolisiert also die nächste Iteration.

Nach einer ersten Fusion kann dieses Verfahren iterativ weitergeführt werden. Hierzu wird das entstandene Volumen wieder lokal bewertet und darauf aufbauend eine neue Positionierung zur Verbesserung gefunden. Mit der neuen Positionierung wird wieder ein Scan durchgeführt und ein Volumen erstellt und bewertet. Anschließend kann wiederum eine Fusion durchgeführt werden.

Zur iterativen Weiterführung des Verfahrens werden deshalb alle Schritte 241, 242, 212, 222, 332, 237, 280 und 290 bis zum Erreichen des Abbruchkriteriums (vgl. 240) wiederholt.

Nachdem bei dem Verfahren 200 davon ausgegangen wurde, dass die Auswahl / Einstellung der nächsten Positionierung durch ein vollautomatisches Verfahren erfolgt (vgl. Schritt 242), wird nun nachfolgend eine Variante mit Benutzerinteraktion vorgestellt. Hierbei wird die Objektpositionierung nach Wahl des Benutzers oder durch den Benutzer selbst vorgenommen.

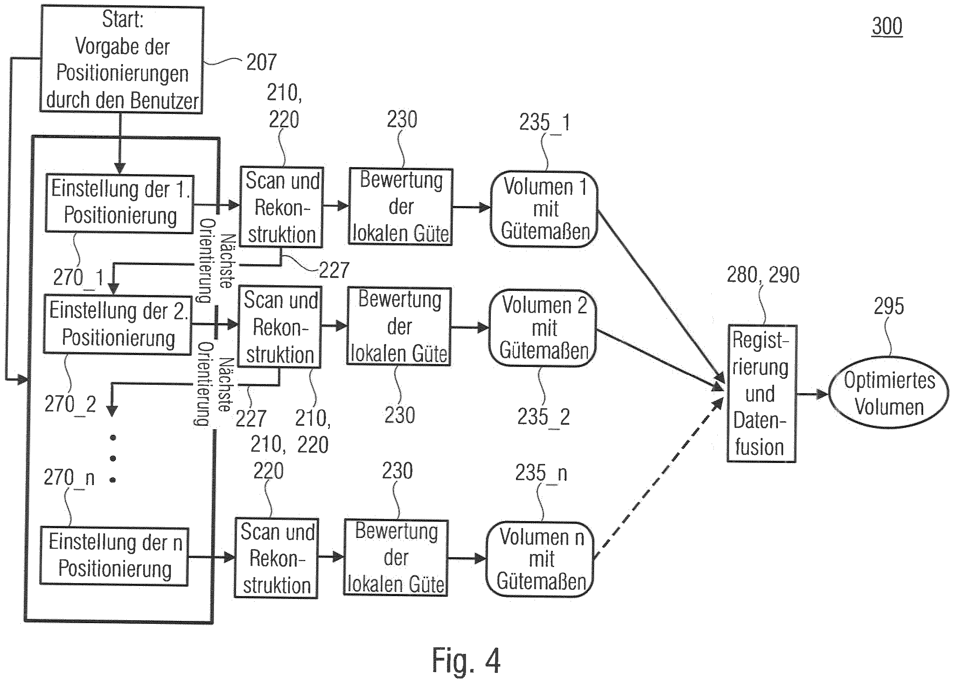

In Fig. 4 ist das entsprechende Verfahren 300 illustriert. Das Verfahren 400 umfasst gleichwertige Verfahrensdurchläufe mit den Schritten 210, 220 und 230, die jeweils zu einem Objektvolumen mit Gütemaß führen. Diese iterativen Verfahrensdurchläufe werden nacheinander durchgeführt, was anhand des Verbindungspfeils 227 symbolisiert ist. Jeder der Verfahrensstränge beginnt mit dem Schritt 270_1 bzw. 270_2 bzw. 270_n. Diese Schritte 270_1 bis 270_n stellen die Positionierung des Objektes dar. Beispielsweise kann die Positionierung durch die Benutzer selbst erfolgen, oder mittels des Manipulators, wobei dann die Position hier entsprechend der Benutzervorgabe gewählt ist. Dies ist anhand des Schrittes 207 illustriert.

Die Schritte der zweiten bzw. aller nachfolgenden Iterationen (vgl. Bezugszeichen 270_2 bzw. 270_n) bekommen als initialen Auslöser die Verbindung zwischen den Strängen 227. Wie anhand der Positionierung des Pfeils 227 zu erkennen ist, kann die Einstellung der weiteren Position 270_2 bzw. 270_n nach erfolgtem Scan 210 oder. Scan und Rekonstruktion 210 bis 220 beginnen. Folglich werden ausgehend von der Benutzereingabe 207 eine Vielzahl von Trajektorien ausgehend von einer Vielzahl an Positionierungen abgefahren und eine Rekonstruktion der so entstandenen Aufnahmen durchgeführt, um den ersten bis n-ten Datensatz mit Gütemaß 235_1 bis 235_n zu erhalten. Diese Datensätze 235_1 bis 235_n werden dann im nachfolgenden Schritt 280 bis 290 registriert und fusioniert, um das optimierte Volumenmodell 295 zu erhalten. In anderen Worten ausgedrückt heißt das, dass hier das beschriebene Verfahren derart angewendet wird, dass das ermittelte Gütemaß je lokaler Bereich bzw. die Bildqualität je CT-Rekonstruktion bzw. je Bereich der jeweiligen CT-Rekonstruktion nicht dazu verwendet wird, um festzustellen, ob weitere Positionierungen notwendig sind, sondern dazu verwendet werden, um die Vielzahl der mittels unterschiedlichen Positionierungen erhaltenen Datenmodelle zu fusionieren, wobei eben bei der Datenfusion die ermittelten resultierenden Bildqualitäten je CT-Rekonstruktion bzw. je Bereich der CT-Rekonstruktion (z. B. durch Gewichtung) berücksichtigt werden.

Wenn man davon ausgeht, dass ausgehend von der Benutzervorgabe 207 die Positionierung 270_1 bis 270_n automatisch erfolgt, lässt sich das Verfahren entsprechend einem Ausführungsbeispiel wie folgt beschreiben.

Im Gegensatz zur vollautomatischen Variante, in der die unterschiedlichen Positionierungen vollautomatisch gewählt werden, werden in dieser Variante die unterschiedlichen Positionierungen durch einen erfahrenen Benutzer oder ein Verfahren im Vorhinein festgelegt. Dies kann z.B. sinnvoll sein, wenn optimale Positionierungen bekannt sind und die Rechenzeit während des Verfahrens minimal sein soll (z.B. in einer Inline-CT).

Mit Hilfe einer Positioniereinheit werden mehrere komplette CT-Scanvorgänge bei den vorher festgelegten Positionierungen durchgeführt. Anschließend werden die entstandenen Projektionen unabhängig voneinander rekonstruiert. Die einzelnen Volumen werden algorithmisch auf ihre lokale Bildgüte untersucht. Mit Hilfe dieser Informationen können nun alle erstellten Volumen registriert und wie beschrieben fusioniert werden.

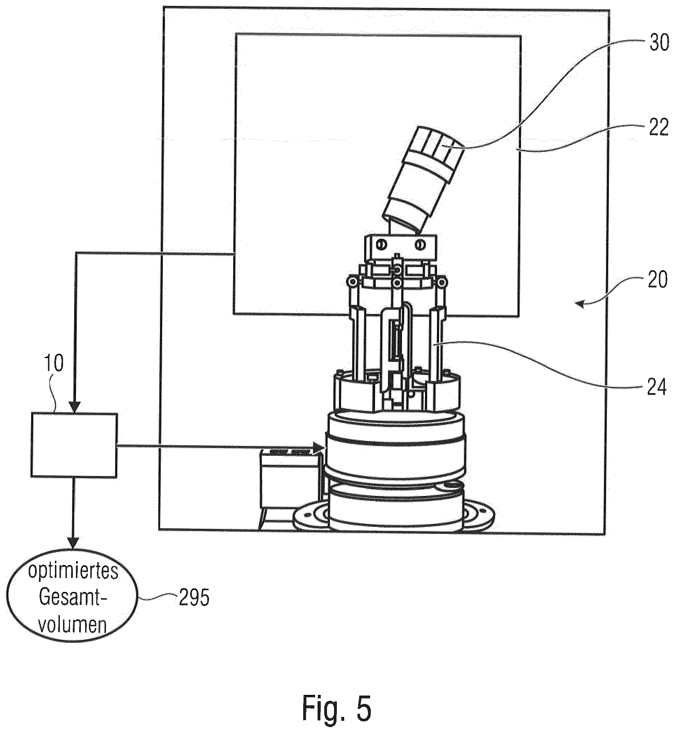

Wie oben bereits angedeutet, kann das Verfahren auch durch eine Vorrichtung durchgeführt werden. Diese Variante ist in Fig. 5 dargestellt. Fig. 5 zeigt eine Vorrichtung 10 in Kombination mit einer Durchstrahlungsvorrichtung 20, wobei hier insbesondere nur der Detektor 22 der Durchstrahlungsvorrichtung gezeigt wird. Mittels dieser Durchstrahlungsvorrichtung 20 wird das Objekt 30 (z. B. Metallkörper) aus unterschiedlichen Positionen (z. B. Raumwinkeln) durchstrahlt. Diese unterschiedlichen Positionen werden mit der Manipulationseinheit 24 (hier ein so genannter Spidermover) angefahren.

Die Vorrichtung 10 weist beispielsweise eine Eingabeschnittstelle auf, die mit dem Detektor 22 verbunden ist, so dass sie die CT-Daten, wie z. B. die Durchstrahlungsaufnahmen oder das bereits durch eine nicht dargestellte Einheit rekonstruierte CT-Modell für den jeweiligen Datensatz erhält. Die Vorrichtung 10 umfasst weiter eine CPU, die dann zumindest den Schritt der lokalen Bewertung (vgl. Fig. 1) durchführt. Entsprechend bevorzugten Ausführungsbeispielen kann diese Vorrichtung 10 auch den Schritt der Rekonstruktion durchführen.

Entsprechend Ausführungsbeispielen ist die Vorrichtung 10 auch ausgebildet, um die Manipulationseinheit, z. B. zur Neufestlegung der weiteren Positionen zu steuern. Deshalb weist die Vorrichtung 10 einen Ausgang zu der Manipulationseinheit 24 auf.

Entsprechend Ausführungsbeispielen liefert die Vorrichtung 10 nach der Rekonstruktion und Fusionierung der mehreren Datenmodelle das optimierte Gesamtmodell 295.

Auch wenn bei obigen Ausführungsbeispielen davon ausgegangen wurde, dass die lokale Bewertung entweder auf Basis der Intensitätswerte oder auf Basis eines Vergleiches der CT-Rekonstruktion mit einer simulierten Rekonstruktion durchgeführt wird, so sei an dieser Stelle angemerkt, dass auch weitere Varianten zur lokalen Bildqualitätsbewertung möglich sind.

Auch sei darauf hingewiesen, dass die oben erläuterte Variante der Datenfusion (mit Nichtberücksichtigung von regionalen Bereichen oder mit Gewichtung) zwar eine bevorzugte Variante ist, es aber auch noch weitere Abwandlungen geben kann, bei welcher die Datenfusion unter Berücksichtigung von im Vorfeld ermittelten Gütewerten erfolgt.

An dieser Stelle sei jedoch auch darauf hingewiesen, dass oben beschriebenes Konzept als bevorzugte Anmeldung industrielle CTs zur Untersuchung und Vermessung von Bauteilen mit hoher Dichte im Fokus hat, da hier die erläuterten Effekte, wie Strahlaufhärtung besonders relevant sind. Obige Ausführungsbeispiele sind nicht auf die reine industrielle Computertomographie eingeschränkt, d.h. auch für andere Anwendungsfälle im Bereich der Computertomographie anwendbar (z.B. Ultraschall).

Auch wenn oben der Bildgütewert als ein solcher beschrieben wurde, der Auskunft über eine Bildqualität gibt, sei angemerkt, dass durch selben auch andere die CT-Rekonstruktion beschreibende Merkmale (z.B. Intensitätsverteilung, Verschmierungen) angezeigt werden können.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Verfahren (100, 200, 300) zur Findung einer zweiten Positionierung (270_1, 270_2, 270_n) eines Objekts (30) bzgl. eines CT-Scans des Objekts (30), mit folgenden Schritten:

   Durchführen oder Simulieren des CT-Scans (110, 210, 212) für eine erste Positionierung, um eine oder mehrere Durchstrahlungsaufnahmen für die erste Positionierung zu erhalten;
   Rekonstruieren (120, 220, 222) einer CT-Rekonstruktion des Objekts auf Basis der einen oder mehreren Durchstrahlungsaufnahmen für die erste Positionierung, um ein erstes Datenmodell (235, 235_1) zu erhalten;
   lokales Bewerten (130, 230, 232) einer Bildgüte für einen oder mehrere lokale Bereiche des ersten Datenmodells, um einen oder mehrere Bildgütewerte für die einen oder mehreren lokalen Bereiche zu erhalten;
   Beurteilen (140, 150, 240, 250) der Bildqualität für die CT-Rekonstruktion oder einen regionalen Bereich der CT-Rekonstruktion anhand der einen oder mehreren Bildgütewerte;
   Festlegen der zweiten Positionierung des Objekts (30) bzgl. des CT-Scans; und
   Wiederholen der Schritte Durchführen oder Simulieren des CT-Scans (110, 210, 212), Rekonstruieren (120, 220, 222), lokales Bewerten (130, 230, 232), Beurteilen und Festlegen für die zweite Positionierung unter Veränderung der zweiten Positionierung;
   **dadurch gekennzeichnet, dass** der Schritt lokales Bewerten (130, 230, 232) den Unterschritt des Aufaddierens von Intensitätswerten je lokaler Bereich aus den ein oder mehreren Durchstrahlungsaufnahmen für die erste Positionierung umfasst, wobei je lokaler Bereich ein hoher Intensitätswert in einem hohen Bildgütewert resultiert; oder

   **dadurch gekennzeichnet, dass** der Schritt lokales Bewerten (130, 230, 232) den Unterschritt des Simulierens einer CT-Rekonstruktion des Objekts sowie den Unterschritt des Vergleichens der simulierten CT-Rekonstruktion mit der CT-Rekonstruktion des Objekts umfasst, wobei je lokaler Bereich eine hohe Übereinstimmung zwischen der simulierten CT-Rekonstruktion und der CT-Rekonstruktion in einem hohen Bildgütewert resultiert.

2. Verfahren (100, 200, 300) gemäß Anspruch 1, wobei das Wiederholen solange erfolgt, bis die Beurteilung ergibt, dass eine ausreichende Bildqualität erhalten wird.

3. Verfahren (100, 200, 300) gemäß Anspruch 1 oder 2, wobei beim Festlegen der zweiten Positionierung ein Steuersignal ausgegeben wird, um einen Manipulator des CT-Systems neu zu positionieren, oder wobei ein Vorschlag für eine zweite Positionierung ausgegeben wird.

4. Verfahren (100, 200, 300) gemäß einem der vorherigen Ansprüche, das das Fusionieren der Datenmodelle für die erste und die zweite Positionierung umfasst, um ein fusioniertes Datenmodell zu erhalten, wobei das Fusionieren unter Berücksichtigung der ein oder mehreren Bildgütewerte für die zumindest erste und zweite Positionierung erfolgt.

5. Verfahren (200) zur Datenfusion von CT-Rekonstruktionen für zumindest eine erste und zweite Positionierung (270_1, 270_2, 270_n) eines Objekts (30) bzgl. eines CT-Scans des Objekts (30), mit folgenden Schritten:

   Durchführen oder Simulieren des CT-Scans (210, 212) für die erste Positionierung, um ein oder mehrere Durchstrahlungsaufnahmen für die erste Positionierung zu erhalten;
   Rekonstruieren (220, 222) einer CT-Rekonstruktion des Objekts auf Basis der einen oder mehreren Durchstrahlungsaufnahmen für die erste Positionierung, um ein erstes Datenmodell (235) zu erhalten;
   lokales Bewerten (230, 232) einer Bildgüte für einen oder mehrere lokale Bereiche des ersten Datenmodells, um einen oder mehrere Bildgütewerte für die einen oder mehreren lokalen Bereiche zu erhalten;
   Wiederholen der Schritte Durchführen oder Simulieren des CT-Scans (210, 212), Rekonstruieren (220, 222) und lokales Bewerten (230, 232) für die zweite Positionierung;
   Fusionieren der Datenmodelle oder der Durchstrahlungsaufnahmen für die erste und die zweite Positionierung, um ein fusioniertes Datenmodell zu erhalten, wobei das Fusionieren unter Berücksichtigung der ein oder mehreren Bildgütewerte für die zumindest erste und zweite Positionierung erfolgt;
   Beurteilen (240) der Bildqualität bei dem fusionierten Datenmodell anhand der ein oder mehreren Bildgütewerte;

wobei die Schritte Rekonstruieren (220, 222), lokales Bewerten (230, 232) und Beurteilen (240) und Fusionieren für eine dritte Positionierung wiederholt werden, wobei die erste, zweite und dritte Positionierung sich voneinander unterscheiden;

**dadurch gekennzeichnet, dass** der Schritt lokales Bewerten (230, 232) den Unterschritt des Aufaddierens von Intensitätswerten je lokaler Bereich aus den ein oder mehreren Durchstrahlungsaufnahmen für die erste Positionierung umfasst, wobei je lokaler Bereich ein hoher Intensitätswert in einem hohen Bildgütewert resultiert; oder

**dadurch gekennzeichnet, dass** der Schritt lokales Bewerten (230, 232) den Unterschritt des Simulierens einer CT-Rekonstruktion des Objekts sowie den Unterschritt des Vergleichens der simulierten CT-Rekonstruktion mit der CT-Rekonstruktion des Objekts umfasst, wobei je lokaler Bereich eine hohe Übereinstimmung zwischen der simulierten CT-Rekonstruktion und der CT-Rekonstruktion in einem hohen Bildgütewert resultiert.

6. Verfahren (100, 200, 300) gemäß einem der vorherigen Ansprüche, wobei der lokale Bereich ein Voxel der CT-Rekonstruktion ist.

7. Verfahren (100, 200, 300) gemäß einem der vorherigen Ansprüche, wobei der Schritt lokales Bewerten (130, 230, 232) für mehrere lokale Bereiche wiederholt wird.

8. Verfahren (100, 150, 200, 300) gemäß einem der vorherigen Ansprüche, wobei der Vergleich für einen oder mehrere lokale Bereiche mit einer punktförmigen Störung durchgeführt wird.

9. Verfahren (100, 150, 200, 300) gemäß einem der vorherigen Ansprüche, wobei das lokale Bewerten (130, 230, 232) den Unterschritt des Ermittelns von Verschmierungen in der CT-Rekonstruktion des Objekts umfasst und wobei ein hoher Grad der Verschmierung in einem geringen Bildgütewert je lokaler Bereich resultiert.

10. Verfahren (100, 200, 300) gemäß einem der Ansprüche 1 bis 4 und 6 bis 9 mit Rückbezug auf 1 bis 4, wobei das Beurteilen (140, 150, 240, 250) den Unterschritt des Schwellwertvergleichs der einzelnen oder kombinierten Bildgütewerte für die einen oder mehreren lokalen Bereiche umfasst.

11. Verfahren (100, 200, 300) gemäß einem der Ansprüche 1 bis 4 und 6 bis 10 mit Rückbezug auf 1 bis 4, wobei der Schritt des Beurteilens (140, 150, 240, 250) den Unterschritt des Vergleichens der resultierenden Bildqualität für die CT-Rekonstruktion ausgehend von der ersten Positionierung mit der CT-Rekonstruktion ausgehend von der zweiten Positionierung oder für einen regionalen Bereich der CT-Rekonstruktion ausgehend von der ersten Positionierung mit einem regionalen Bereich der CT-Rekonstruktion ausgehend von der zweiten Positionierung umfasst.

12. Verfahren (100, 150, 200, 300) gemäß Anspruch 11, wobei das Vergleichen für mehrere regionale Bereiche, umfassend jeweils mehrere lokale Bereiche, in der CT-Rekonstruktion ausgehend von der ersten und der zweiten Positionierung durchgeführt wird.

13. Verfahren (100, 150, 200, 300) gemäß Anspruch 11 oder 12, wobei der Schritt des Vergleichens nur für regionale Bereiche mit niedriger resultierender Bildqualität durchgeführt wird.

14. Verfahren (100, 150, 200, 300) gemäß einem der Ansprüche 1-4 und 6-13, wobei die Schritte Rekonstruieren (120, 220, 222), lokales Bewerten (130, 230, 232) und Beurteilen (140, 150, 240, 250) für eine dritte Positionierung wiederholt werden, wobei die erste, zweite und dritte Positionierung sich voneinander unterscheiden.

15. Verfahren (100, 150, 200, 300) gemäß Anspruch 5 oder 14, wobei die Schritte Rekonstruieren, lokales Bewerten (130, 230, 232) und Beurteilen für eine vierte Positionierung wiederholt werden, wobei die vierte Positionierung in der Nähe der Positionierung, umfassend die erste, zweite und dritte Positionierung, ist, die die höchste resultierende relative Bildqualität liefert, wobei die relative Bildqualität durch Vergleichen der Bildqualitäten für die erste, zweite und dritte Positionierung ermittelt ist.

16. Verfahren (150, 200, 300) gemäß einem der Ansprüche 5 und 6 bis 15 mit Rückbezug auf 5, wobei die Schritte lokales Bewerten (130, 230, 232) und Beurteilen (140, 150, 240, 250) für das fusionierte Datenmodell wiederholt werden.

17. Verfahren (150, 200, 300) gemäß einem der Ansprüche 5 und 6 bis 16 mit Rückbezug auf 5, wobei der Schritt des Fusionierens durch eine gewichtete Addition des ersten und des zweiten Datenmodells erfolgt, wobei die Gewichtungsfaktoren aus den Bildgütewerten je lokaler Bereich abgeleitet werden.

18. Verfahren (100, 150, 200, 300) gemäß Anspruch 17, wobei das fusionierte Datenmodell nach folgender Formel berechnet wird:

$$v_i = \frac{1}{g_{i1} + g_{i2}}(v_{i1}g_{i1} + v_{i2}g_{i2})$$

,

wobei $v_i$ das gesuchte Voxel im fusionierten Datenmodell ist, $v_{i1}$ das entsprechende Voxel im ersten Datenmodell ist, $v_{i2}$ das entsprechende Voxel im zweiten Datenmodell ist, wobei $g_{i1}$ der Bildgütewert für das entsprechende Voxel des ersten Datenmodells ist und $g_{i2}$ der Bildgütewert des entsprechenden Voxels im zweiten Datenmodell.

19. Verfahren (100, 150, 200, 300) gemäß Anspruch 18, wobei lokale Bereiche des ersten Datenmodells und/oder des zweiten Datenmodells mit Bildgütewerten kleiner eines vordefinierten Schwellenwerts keine Berücksichtigung finden; und/oder wobei regionale Bereiche des ersten und/oder des zweiten Datenmodells mit resultierender Bildqualität kleiner eines vordefinierten Schwellenwerts keine Berücksichtigung finden.

20. Verfahren (100, 150, 200, 300) gemäß einem der vorherigen Ansprüche, wobei zumindest einer der Schritte manuell durchgeführt wird.

21. Vorrichtung (10) zur Findung von zumindest einer zweiten Positionierung (270_1, 270_2, 270_n) eines Objekts (30) bzgl. eines CT-Scans des Objekts (30) oder zur Datenfusion von CT-Rekonstruktionen für zumindest die ersten und zweite Positionierung für CT-System mit einer Durchstrahlungsvorrichtung (20), wobei die Vorrichtung (10) eine Berechnungseinheit aufweist, die ausgebildet ist, ausgehend von ein oder mehrere Durchstrahlungsaufnahmen für eine erste Positionierung des CT-Scans eine CT-Rekonstruktion des Objekts durchzuführen oder zu simulieren, um ein erstes Datenmodell (235, 235_1) für die erste Positionierung zu erhalten und um eine CT-Rekonstruktion des Objekts auf Basis der einen oder mehreren Durchstrahlungsaufnahmen für die erste Positionierung zu rekonstruieren, um ein erstes Datenmodell (235, 235_1) zu erhalten, und um eine Bildgüte für einen oder mehrere lokale Bereiche des ersten Datenmodells für die erste Positionierung lokal zu bewerten, um einen oder mehrere Bildgütewerte für die einen oder mehreren lokalen Bereiche zu erhalten; **dadurch gekennzeichnet, dass** die Berechnungseinheit ausgebildet ist, um die Bildqualität für die CT-Rekonstruktion oder einen regionalen Bereich der CT-Rekonstruktion anhand der einen oder mehreren Bildgütewerte zu bewerten und um die zweiten Positionierung des Objekts (30) bzgl. des CT-Scans festzulegen und um die Schritte Durchführen oder Simulieren des CT-Scans (110, 210, 212), Rekonstruieren (120, 220, 222) und lokales Bewerten (130, 230, 232) für die zweite Positionierung zu wiederholen; oder wobei die Berechnungseinheit ausgebildet ist, um die Schritte Durchführen oder Simulieren des CT-Scans (110, 210, 212), Rekonstruieren (120, 220, 222) und lokales Bewerten (130, 230, 232) für die zweite Positionierung zu wiederholen und um die CT-Rekonstruktionen für die erste und die zweite Positionierung zu rekonstruieren, um ein fusioniertes Datenmodell zu erhalten, wobei das Fusionieren unter Berücksichtigung der ein oder mehreren Bildgütewerte für die zumindest erste und zweite Positionierung erfolgt; wobei das lokale Bewerten (130, 230, 232) den Unterschritt des Aufaddierens von Intensitätswerten je lokaler Bereich aus den ein oder mehreren Durchstrahlungsaufnahmen für die erste Positionierung umfasst, wobei je lokaler Bereich ein hoher Intensitätswert in einem hohen Bildgütewert resultiert; oder wobei das lokale Bewerten (130, 230, 232) den Unterschritt des Simulierens einer CT-Rekonstruktion des Objekts sowie den Unterschritt des Vergleichens der simulierten CT-Rekonstruktion mit der CT-Rekonstruktion des Objekts umfasst, wobei je lokaler Bereich eine hohe Übereinstimmung zwischen der simulierten CT-Rekonstruktion und der CT-Rekonstruktion in einem hohen Bildgütewert resultiert.

22. Computerprogramm mit einem Programmcode, dahingehend wirksam, dass die Vorrichtung des Anspruchs 21 die Verfahrensschritte nach einem der Ansprüche 1-20 ausführt.

23. CT-System mit einer Vorrichtung (10) nach Anspruch 21 sowie einer Durchstrahlungsvorrichtung (20).

**Claims**

1. A method (100, 200, 300) for finding a second positioning (270_1, 270_2, 270_n) of an object (30) relative to a CT scan of the object (30), comprising the steps of:

performing or simulating the CT scan (110, 210, 212) for a first positioning to obtain one or more radiographs for the first positioning;

reconstructing (120, 220, 222) a CT reconstruction of the object on the basis of the one or more radiographs for the first positioning to obtain a first data model (235, 235_1);

locally evaluating (130, 230, 232) an image quality for one or more local regions of the first data model to obtain one or more image quality values for the one or more local regions;

judging (140, 150, 240, 250) the image quality for the CT reconstruction or a regional region of the CT reconstruction using the one or more image quality values;

determining the second positioning of the object (30) relative to the CT scan; and

repeating the steps of performing or simulating the CT scan (110, 210, 212), reconstructing (120, 220, 222), locally evaluating (130, 230, 232), judging and determining for the second positioning while changing the second positioning;

**characterized in that** the step of locally evaluating (130, 230, 232) comprises the sub-step of adding up intensity values per local region from the one or more radiographs for the first positioning, wherein a high intensity value results in a high image quality value per local region; or

**characterized in that** the step of locally evaluating (130, 230, 232) comprises the sub-step of simulating a CT reconstruction of the object and the sub-step of comparing the simulated CT reconstruction to the CT reconstruction of the object, wherein a high match between the simulated CT reconstruction and the CT reconstruction results in a high image quality value per local region.

2. The method (100, 200, 300) in accordance with claim 1, wherein repeating is performed until result of the judging is that a sufficient image quality is obtained.

3. The method (100, 200, 300) in accordance with claim 1 or 2, wherein, when determining the second positioning, a control signal is output to newly position a manipulator of the CT system, or wherein a suggestion for a second positioning is output.

4. The method (100, 200, 300) in accordance with any of the preceding claims, comprising fusing the data models for the first and second positionings to obtain a fused data model, wherein fusing is performed while considering the one or more image quality values for the at least first and second positionings.

5. A method (200) for data fusion of CT reconstructions for at least a first and a second positioning (270_1, 270_2, 270_n) of an object (30) relative to a CT scan of the object (30), comprising the steps of:

performing or simulating the CT scan (210, 212) for the first positioning to obtain one or more radiographs for the first positioning;

reconstructing (220, 222) a CT reconstruction of the object based on the one or more radiographs for the first positioning to obtain a first data model (235);

locally evaluating (230, 232) an image quality for one or more local regions of the first data model to obtain one or more image quality values for the one or more local regions;

repeating the steps of performing or simulating the CT scan (210, 212), reconstructing (220, 222) and locally evaluating (230, 232) for the second positioning;

fusing the data models or the radiographs for the first and second positionings to obtain a fused data model, wherein fusing is performed while considering the one or more image quality values for the at least first and second positionings;

judging (240) the image quality in the fused data model using the one or more image quality values;

wherein the steps of reconstructing (220, 222), locally evaluating (230, 232) and judging (240) and fusing are repeated for a third positioning, the first, second and third positioning differing from one another;

**characterized in that** the step of locally evaluating (230, 232) comprises the sub-step of adding up intensity values per local region from the one or more radiographs for the first positioning, wherein a high intensity value results in a high image quality value per local region; or

**characterized in that** the step of locally evaluating (230, 232) comprises the sub-step of simulating a CT reconstruction of the object and the sub-step of comparing the simulated CT reconstruction to the CT reconstruction of the object, wherein a high match between the simulated CT reconstruction and the CT reconstruction results in a high image quality value per local region.

6. The method (100, 200, 300) in accordance with any of the preceding claims, wherein the local region is a voxel of the CT reconstruction.

7. The method (100, 200, 300) in accordance with any of the preceding claims, wherein the step of locally evaluating (130, 230 , 232) is repeated for several local regions.

8. The method (100, 150, 200, 300) in accordance with any of the preceding claims, wherein the comparison is performed for one or more local regions with a point-shaped disturbance.

9. The method (100, 150, 200, 300) in accordance with any of the preceding claims, wherein locally evaluating (130, 230, 232) comprises the sub-step of determining smearing in the CT reconstruction of the object, and wherein a high degree of smearing results in a low image quality value per local region.

10. The method (100, 200, 300) in accordance with any of claims 1 to 4 and 6 to 9 when dependent on 1 to 4, wherein judging (140, 150, 240, 250) comprises the sub-step of comparing threshold values of the individual or combined image quality values for the one or more local regions.

11. The method (100, 200, 300) in accordance with any of claims 1 to 4 and 6 to 10 when dependent on 1 to 4, wherein the step of judging (140, 150, 240, 250) comprises the sub-step of comparing the resulting image quality for the CT reconstruction starting from the first positioning to the CT reconstruction starting from the second positioning, or for a regional region of the CT reconstruction starting from the first positioning to a regional region of the CT reconstructing starting from the second positioning.

12. The method (100, 150, 200, 300) in accordance with claim 11, wherein comparing is performed for several regional regions, each comprising several local regions, in the CT reconstruction starting from the first and the second positioning.

13. The method (100, 150, 200, 300) in accordance with claim 11 or 12, wherein the step of comparing is performed only for regional regions of a low resulting image quality.

14. The method (100, 150, 200, 300) in accordance with any of claims 1 to 4 and 6 to 13, wherein the steps of reconstructing (120, 220, 222), locally evaluating (130, 230, 232) and judging (140, 150, 240, 250) are repeated for a third positioning, the first, second and third positionings differing from one another.

15. The method (100, 150, 200, 300) in accordance with claim 5 or 14, wherein the steps of reconstructing, locally evaluating (130, 230, 232) and judging are repeated for a fourth positioning, the fourth positioning being close to that positioning comprising the first, second and third positioning, which provides the highest resulting relative image quality, the relative image quality being determined by comparing the image qualities for the first, second and third positionings.

16. The method (150, 200, 300) in accordance with any of claims 5 and 6 to 15 when dependent on 5, wherein the steps of locally evaluating (130, 230, 232) and judging (140, 150, 240, 250) are repeated for the fused data model.

17. The method (150, 200, 300) in accordance with any of claims 5 and 6 to 16 when dependent on 5, wherein the step of fusing is performed by a weighted addition of the first and the second data model, the weighting factors being derived from the image quality values per local region.

18. The method (100, 150, 200, 300) in accordance with claim 17, wherein the fused data model is calculated according to the following formula:

$$v_i = \frac{1}{g_{i1} + g_{i2}}(v_{i1}g_{i1} + v_{i2}g_{i2})$$

,

wherein $v_i$ is the voxel, which is searched for, in the fused data model, $v_{i1}$ is the corresponding voxel in the first data model, $v_{i2}$ is the corresponding voxel in the second data model, wherein $g_{i1}$ is the image quality value for the corresponding voxel of the first data model and $g_{i2}$ is the image quality value of the corresponding voxel in the second data model.

19. The method (100, 150, 200, 300) in accordance with claim 18, wherein local regions of the first data model and/or the second data model having image quality values smaller than a predefined threshold value are not taken into consideration; and/or wherein regional regions of the first and/or the second data model having a resulting image quality smaller than a predefined threshold value are not taken into consideration.

20. The method (100, 150, 200, 300) in accordance with any of the preceding claims, wherein at least one of the steps is performed manually.

21. A device (10) for finding at least a second positioning (270_1, 270_2, 270_n) of an object (30) relative to a CT scan of the object (30) or for data fusion of CT reconstructions for at least the first and second positionings for a CT system comprising a radiography device (20), the device (10) comprising a calculating unit configured to perform or simulate, starting from one or more radiographs for a first positioning of the CT scan, a CT reconstruction of the object to obtain a first data model (235, 235_1) for the first positioning, and to reconstruct a CT reconstruction of the object based on the one or more radiographs for the first positioning to obtain a first data model (235, 235_1), and to evaluate an image quality for one or more local regions of the first data model for the first positioning to obtain one or more image quality values for the one or more local regions;

characterized in that the calculating unit is configured to evaluate the image quality for the CT reconstruction or a regional region of the CT reconstruction using the one or more image quality values and to determine the second positioning of the object (30) relative to the CT scan, and to repeat the steps of performing or simulating the CT scan (110, 210, 212) , reconstructing (120, 220, 222) and locally evaluating (130, 230, 232) for the second positioning; or

wherein the calculating unit is configured to repeat the steps of performing or simulating the CT scan (110, 210, 212), reconstructing (120, 220, 222) and locally evaluating (130, 230, 232) for the second positioning and to reconstruct the CT reconstructions for the first and second positionings to obtain a fused data model, wherein fusing is performed while considering the one or more image quality values for the at least first and second positionings;

wherein locally evaluating (130, 230, 232) comprises the sub-step of adding up intensity values per local region from the one or more radiographs for the first positioning, wherein a high intensity value results in a high image quality value per local region; or

wherein locally evaluating (130, 230, 232) comprises the sub-step of simulating a CT reconstruction of the object and the sub-step of comparing the simulated CT reconstruction to the CT reconstruction of the object, wherein a high match between the simulated CT reconstruction and the CT reconstruction results in a high image quality value per local region.

22. A computer program comprising program code operative in that the device of claim 21 performs the method steps in accordance with any of claims 1 to 20.

23. A CT system comprising a device (10) in accordance with claim 21 and a radiography device (20).

**Revendications**

1. Procédé (100, 200, 300) permettant de trouver un deuxième positionnement (270_1, 270_2, 270_n) d'un objet (30) par rapport à un balayage CT de l'objet (30), aux étapes suivantes consistant à :

effectuer ou simuler le balayage CT (110, 210, 212) pour un premier positionnement pour obtenir une ou plusieurs radiographies pour le premier positionnement;

reconstruire (120, 220, 222) une reconstruction CT de l'objet sur base des une ou plusieurs radiographies pour le premier positionnement pour obtenir un premier modèle de données (235, 235_1);

évaluer localement (130, 230, 232) une qualité d'image pour une ou plusieurs zones locales du premier modèle de données pour obtenir une ou plusieurs valeurs de qualité d'image pour les une ou plusieurs zones locales;

juger (140, 150, 240, 250) la qualité d'image pour la reconstruction CT ou une zone régionale de la reconstruction CT à l'aide d'une ou plusieurs valeurs de qualité d'image;

établir le deuxième positionnement de l'objet (30) par rapport au balayage CT; et

répéter les étapes de réalisation ou de simulation du balayage CT (110, 210, 212), de reconstruction (120, 220, 222), d'évaluation locale (130, 230, 232), de jugement et d'établissement pour le deuxième positionnement tout en modifiant le deuxième positionnement;

caractérisé par le fait que l'étape d'évaluation locale (130, 230, 232) comporte la sous-étape consistant à additionner les valeurs d'intensité par zone locale à partir des une ou plusieurs radiographies pour le premier positionnement, où, par zone locale, une haute valeur d'intensité résulte en une haute valeur de qualité d'image; ou

**caractérisé par le fait que** l'étape d'évaluation locale (130, 230, 232) comporte la sous-étape consistant à simuler une reconstruction CT de l'objet ainsi que la sous-étape consistant à comparer la reconstruction CT simulée avec la reconstruction CT de l'objet, où, par zone locale, une haute correspondance entre la reconstruction CT simulée et la reconstruction CT résulte en une haute valeur de qualité d'image.

2. Procédé (100, 200, 300) selon la revendication 1, dans lequel la répétition a lieu jusqu'à ce que l'évaluation montre qu'il est obtenu une qualité d'image suffisante.

3. Procédé (100, 200, 300) selon la revendication 1 ou 2, dans lequel est émis, lors de l'établissement du deuxième positionnement, un signal de commande pour repositionner un manipulateur du système CT, ou dans lequel est émise une suggestion pour un deuxième positionnement.

4. Procédé (100, 200, 300) selon l'une des revendications précédentes, qui comporte le fait de fusionner les modèles de données pour le premier et le deuxième positionnement pour obtenir un modèle de données fusionné, dans lequel la fusion a lieu en tenant compte des une ou plusieurs valeurs de qualité d'image pour les au moins premier et deuxième positionnements.

5. Procédé (200) de fusion de données de reconstructions CT pour au moins un premier et un deuxième positionnement (270_1, 270_2, 270_n) d'un objet (30) par rapport à un balayage CT de l'objet (30), aux étapes suivantes consistant à:

effectuer ou simuler le balayage CT (210, 212) pour le premier positionnement pour obtenir une ou plusieurs radiographies pour le premier positionnement;

reconstruire (220, 222) une reconstruction CT de l'objet sur base des une ou plusieurs radiographies pour le premier positionnement pour obtenir un premier modèle de données (235);

évaluer localement (230, 232) une qualité d'image pour une ou plusieurs zones locales du premier modèle de données pour obtenir une ou plusieurs valeurs de qualité d'image pour les une ou plusieurs zones locales;

répéter les étapes de réalisation ou de simulation du balayage CT (210, 212), de reconstruction (220, 222) et d'évaluation locale (230, 232) pour le deuxième positionnement;

fusionner les modèles de données ou les radiographies pour le premier et le deuxième positionnement pour obtenir un modèle de données fusionné, où la fusion a lieu en tenant compte des une ou plusieurs valeurs de qualité d'image pour les au moins premier et deuxième positionnements;

juger (240) la qualité d'image dans le modèle de données fusionné à l'aide des une ou plusieurs valeurs de qualité d'image;

dans lequel les étapes de reconstruction (220, 222), d'évaluation locale (230, 232) et de jugement (240) et de fusion sont répétées pour un troisième positionnement, où les premier, deuxième et troisième positionnements diffèrent l'un de l'autre;

**caractérisé par le fait que** l'étape d'évaluation locale (230, 232) comporte la sous-étape consistant à additionner les valeurs d'intensité, par zone locale, des une ou plusieurs radiographies pour le premier positionnement, où, par zone locale, une haute valeur d'intensité résulte en une haute valeur de qualité d'image; ou

**caractérisé par le fait que** l'étape d'évaluation locale (230, 232) comporte la sous-étape consistant à simuler une reconstruction CT de l'objet ainsi que la sous-étape consistant à comparer la reconstruction CT simulée avec la reconstruction CT de l'objet, où, par zone locale, une haute correspondance entre la reconstruction CT simulée et la reconstruction CT résulte en une haute valeur de qualité d'image.

6. Procédé (100, 200, 300) selon l'une des revendications précédentes, dans lequel la zone locale est un voxel de la reconstruction CT.

7. Procédé (100, 200, 300) selon l'une des revendications précédentes, dans lequel l'étape d'évaluation locale (130, 230, 232) est répétée pour plusieurs zones locales.

8. Procédé (100, 150, 200, 300) selon l'une des revendications précédentes, dans lequel la comparaison est effectuée pour une ou plusieurs zones locales avec une perturbation en forme de pointe.

9. Procédé (100, 150, 200, 300) selon l'une des revendications précédentes, dans lequel l'évaluation locale (130, 230, 232) comporte la sous-étape consistant à déterminer les maculages dans la reconstruction CT de l'objet et dans lequel un haut degré de maculage résulte en une faible valeur de qualité d'image par zone locale.

10. Procédé (100, 200, 300) selon l'une des revendications 1 à 4 et 6 à 9 avec référence à nouveau aux revendications 1 à 4, dans lequel le jugement (140, 150, 240, 250) comporte la sous-étape consistant à comparer la valeur de seuil des valeurs de qualité d'image individuelles ou combinées pour les une ou plusieurs zones locales.

11. Procédé (100, 200, 300) selon l'une des revendications 1 à 4 et 6 à 10 avec référence à nouveau aux revendications 1 à 4, dans lequel l'étape de jugement (140, 150, 240, 250) comporte la sous-étape consistant à comparer la qualité d'image résultante pour la reconstruction CT en partant du premier positionnement avec la reconstruction CT en partant du deuxième positionnement ou pour une zone régionale de la reconstruction CT en partant du premier positionnement avec une zone régionale de la reconstruction CT en partant du deuxième positionnement.

12. Procédé (100, 150, 200, 300) selon la revendication 11, dans lequel la comparaison est effectuée pour plusieurs zones régionales comportant, chacune, plusieurs zones locales, dans la reconstruction CT en partant du premier et du deuxième positionnement.

13. Procédé (100, 150, 200, 300) selon la revendication 11 ou 12, dans lequel l'étape de comparaison est effectuée uniquement pour les zones régionales à faible qualité d'image résultante.

14. Procédé (100, 150, 200, 300) selon l'une des revendications 1 à 4 et 6 à 13, dans lequel les étapes de reconstruction (120, 220, 222), d'évaluation locale (130, 230, 232) et de jugement (140, 150, 240, 250) sont répétées pour un troisième positionnement, dans lequel le premier, le deuxième et le troisième positionnement diffèrent l'un de l'autre.

15. Procédé (100, 150, 200, 300) selon la revendication 5 ou 14, dans lequel les étapes de reconstruction, d'évaluation locale (130, 230, 232) et de jugement sont répétées pour un quatrième positionnement, dans lequel le quatrième positionnement est à proximité du positionnement, comprenant le premier, le deuxième et le troisième positionnement, qui fournit la qualité d'image relative résultante la plus haute, dans lequel la qualité d'image relative est déterminée en comparant les qualités d'image pour le premier, le deuxième et le troisième positionnement.

16. Procédé (150, 200, 300) selon l'une des revendications 5 et 6 à 15 avec référence à nouveau à la revendication 5, dans lequel les étapes d'évaluation locale (130, 230, 232) et de jugement (140, 150, 240, 250) pour le modèle de données fusionné sont répétées.

17. Procédé (150, 200, 300) selon l'une des revendications 5 et 6 à 16 avec référence à nouveau à la revendication 5, dans lequel l'étape de fusion a lieu par une addition pondérée du premier et du deuxième modèle de données, dans lequel les facteurs de pondération sont dérivés des valeurs de qualité d'image par zone locale.

18. Procédé (100, 150, 200, 300) selon la revendication 17, dans lequel le modèle de données fusionné est calculé selon la formule suivante:

$$v_i = \frac{1}{g_{i1} + g_{i2}} (v_{i1} g_{i1} + v_{i2} g_{i2}),$$

où $v_i$ est le voxel recherché dans le modèle de données fusionné, $v_{i1}$ est le voxel correspondant dans le premier modèle de données, $v_{i2}$ est le voxel correspondant dans le deuxième modèle de données, $g_{i1}$ est la valeur de qualité d'image pour le voxel correspondant du premier modèle de données et $g_{i2}$ est la valeur de qualité d'image pour le voxel correspondant dans le deuxième modèle de données.

19. Procédé (100, 150, 200, 300) selon la revendication 18, dans lequel les zones locales du premier modèle de données et/ ou du deuxième modèle de données à valeurs de qualité d'image inférieures à une valeur de seuil prédéfinie ne sont pas tenues en compte; et/ou
dans lequel les zones régionales du premier et/ou du deuxième modèle de données à qualité d'image résultante inférieure à une valeur de seuil prédéfinie ne sont pas tenues en compte.

20. Procédé (100, 150, 200, 300) selon l'une des revendications précédentes, dans lequel au moins une des étapes est réalisée manuellement.

**21.** Dispositif (10) permettant de trouver au moins un deuxième positionnement (270_1, 270_2, 270_n) d'un objet (30) par rapport à un balayage CT de l'objet (30) ou de fusion de données de reconstructions CT pour au moins le premier et le deuxième positionnement pour un système CT avec un dispositif de radiographie (20), dans lequel le dispositif (10) présente une unité de calcul qui est conçue pour réaliser ou simuler, en partant d'une ou plusieurs radiographies pour un premier positionnement du balayage CT, une reconstruction CT de l'objet pour obtenir un premier modèle de données (235, 235_1) pour le premier positionnement, et pour reconstruire une reconstruction CT de l'objet sur base des une ou plusieurs radiographies pour le premier positionnement pour obtenir un premier modèle de données (235, 235_1), et pour évaluer localement une qualité d'image pour une ou plusieurs zones locales du premier modèle de données pour le premier positionnement, pour obtenir une ou plusieurs valeurs de qualité d'image pour les une ou plusieurs zones locales;

**caractérisé par le fait que** l'unité de calcul est conçue pour évaluer la qualité d'image pour la reconstruction CT ou une zone régionale de la reconstruction CT à l'aide des une ou plusieurs valeurs de qualité d'image et pour établir le deuxième positionnement de l'objet (30) par rapport au balayage CT et pour répéter les étapes de réalisation ou de simulation du balayage CT (110, 210, 212), de reconstruction (120, 220, 222) et d'évaluation locale (130, 230, 232) pour le deuxième positionnement; ou

dans lequel l'unité de calcul est conçue pour répéter les étapes de réalisation ou de simulation du balayage CT (110, 210, 212), de reconstruction (120, 220, 222) et d'évaluation locale (130, 230, 232) pour le deuxième positionnement et pour reconstruire les reconstructions CT pour le premier et le deuxième positionnement pour obtenir un modèle de données fusionnées, dans lequel la fusion a lieu en tenant compte des une ou plusieurs valeurs de qualité d'image pour les au moins premier et deuxième positionnements;

dans lequel l'évaluation locale (130, 230, 232) comporte la sous-étape consistant à additionner les valeurs d'intensité par zone locale à partir des une ou plusieurs radiographies pour le premier positionnement, dans lequel, par zone locale, une haute valeur d'intensité résulte en une haute valeur de qualité d'image; ou dans lequel l'évaluation locale (130, 230, 232) comporte la sous-étape consistant à simuler une reconstruction CT de l'objet ainsi que la sous-étape consistant à comparer la reconstruction CT simulée avec la reconstruction CT de l'objet, dans lequel, par zone locale, une haute correspondance entre la reconstruction CT simulée et la reconstruction CT résulte en une haute valeur de qualité d'image.

**22.** Programme d'ordinateur avec un code de programme efficace en ce que le dispositif selon la revendication 21 réalise les étapes de procédé selon l'une des revendications 1 à 20.

**23.** Système CT avec un dispositif (10) selon la revendication 21 ainsi qu'un dispositif de radiographie (20).

100

110 — Scan

120, 120' — Rekonstruktion

130 — lokale Bewertung

140 — Überprüfung Qualität

170 — Neupositionierung

Fig. 1

Fig. 2

200

205 — Start:
Platzierung des Objekts
auf der Positioniereinheit

100

210 — Scan des Objekts

220 — Rekonstruktion der
Projektionen zu
einem Volumen

230 — Bewertung der
lokalen Bildqualität

Optimiertes
Gesamtvolumen

241

235,
295 — Objektvolumen
mit Gütemaßen

240
ja
Abbruchkriterium
erfüllt?
nein

Bestimmung des
problematischen
Bereichs

290 — Datenfusion

242 — Auswahl und
Einstellung der
nächsten
Positionierung

280 — Registrierung des
neuen Volumens

212 — Scan des Objekts

237 — Objektvolumen
mit Gütemaßen

232 — Bewertung der
lokalen Bildqualität

222 — Rekonstruktion der
Projektionen zu
einem Volumen

Fig. 3

22

Fig. 4

30

22

20

24

10

optimiertes
Gesamtvolumen

295

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GABRIEL HERL.** *Fusion mehrerer Computertomographie-Aufnahmen zur Verbesserung der Bildqualität,* 09. Marz 2017